# EUROPEAN PATENT APPLICATION

(11) **EP 4 491 391 A1**
(43) Date of publication of application: **15.01.2025**
(21) Application number: 22930856.4
(22) Date of filing: 10.03.2022
(51) Int. Cl.: B32B 27/00, B32B 27/18, C09J 201/00, C09J 7/35, B32B 7/023, B32B 7/027

(54) **HEAT-SEALABLE HEAT-SENSITIVE FILM AND METHOD FOR PRODUCING SAME**

(71) Applicant: Osaka Sealing Printing Co., Ltd., Osaka-shi, Osaka 543-0028 (JP)
(72) Inventor: FURUSAWA, Hiroki, Osaka 543-0028 (JP); MORIYA, Miwa, Osaka 543-0028 (JP); YOSHIDA, Masahiko, Osaka 543-0028 (JP)
(74) Representative: Zimmermann, Tankred Klaus
(86) International application number: PCT/JP2022/010652
(87) International publication number: WO 2023/170875

(57) **Abstract**

A heat-sealable heat-sensitive film of the present invention includes a substrate and a heat-sensitive recording layer and is thermally bonded to a material to be sealed, in which the heat-sensitive recording layer is not provided in a portion of the substrate that is thermally bonded to the material to be sealed, and the heat-sensitive recording layer is provided in a portion of the substrate other than the portion of the substrate that is thermally bonded to the material to be sealed.

## Description

### TECHNICAL FIELD

The present invention relates to a heat-sealable heat-sensitive film and a method for producing the same.

### BACKGROUND ART

Conventionally, packaging materials for heat-sealing containers for foods and the like using resin films have been known. The heat-sealable heat-sensitive film described in PATENT LITERATURE 1 includes an amorphous film having heat-sealability, a pre-printing area where a pre-print layer is formed on at least one surface of the amorphous film, and a non-pre-printing area where no pre-print layer is formed.

On the other hand, in a heat-sensitive film known as a packaging material for containers for foods and the like, a heat-sensitive color developing composition develops color through a chemical reaction when heated by a thermal head or the like, and a recorded image is obtained (see, for example, PATENT LITERATURE 2). When the heat-sensitive film is used as the heat-sealable heat-sensitive film, it is necessary to prevent color development of the heat-sensitive color developing composition due to heat during heat-sealing.

### CITATION LIST

### PATENT LITERATURE

PATENT LITERATURE 1: JP-A-2019-172276
PATENT LITERATURE 2: JP-A-2002-362027

### SUMMARY OF INVENTION

### PROBLEMS TO BE SOLVED BY INVENTION

The present invention has been made by focusing on such an actual situation. An object of the present invention is to provide a heat-sealable heat-sensitive film and a method for producing the same as described below. In the heat-sensitive film, when the heat-sensitive film is used as the heat-sealable heat-sensitive film, color development of the heat-sensitive color developing composition due to the heat during heat-sealing is prevented.

### SOLUTION TO PROBLEMS

In order to achieve the above object, the present invention has the following configuration.

A heat-sealable heat-sensitive film of the present invention includes a substrate and a heat-sensitive recording layer and is thermally bonded to a material to be sealed, in which the heat-sensitive recording layer is not provided in a portion of the substrate that is thermally bonded to the material to be sealed, and the heat-sensitive recording layer is provided in a portion of the substrate other than the portion of the substrate that is thermally bonded to the material to be sealed.

The heat-sealable heat-sensitive film configured as described above avoids color development of the heat-sensitive recording layer during thermal bonding, and widens a range of selection of temperature for thermal bonding with the material to be sealed and printing temperature. This increases versatility and gives customers a wider selection of printers.

Further, in the heat-sealable heat-sensitive film according to claim 2, the heat-sensitive recording layer is provided only in a portion where printing is planned.

In the heat-sealable heat-sensitive film configured as described above, a transparent portion of the heat-sealable heat-sensitive film can be secured to the maximum extent. This can improve visibility of a product inside the material to be sealed, such as a container.

Further, in the heat-sealable heat-sensitive film according to claim 3, a protective layer is provided on an entire surface of the substrate on a side where the heat-sensitive recording layer is provided.

In the heat-sealable heat-sensitive film configured as described above, a thermal printer and a heat seal bar can be protected. This allows the heat-sensitive film to not only withstand high temperature thermal printers, but also protect the heat seal bar.

Further, in the heat-sealable heat-sensitive film according to claim 4, an anchor layer is provided in a portion where the substrate and the heat-sensitive recording layer are in contact with each other, and in a portion where the substrate and the protective layer are in contact with each other.

In the heat-sealable heat-sensitive film configured as described above, an adhesion strength between the substrate and the heat-sensitive recording layer and an adhesion strength between the substrate and the protective layer are improved.

Further, in the heat-sealable heat-sensitive film according to claim 5, the protective layer has an anti-diffused reflection layer made of colloidal silica.

The heat-sealable heat-sensitive film configured as described above has improved heat resistance and transparency. Thus, the heat-sealable heat-sensitive film can have heat resistance, and the visibility of the product inside the material to be sealed, such as a container, can be improved.

Further, in the heat-sealable heat-sensitive film according to claim 6, a particle size of the colloidal silica is 1.0 µm or less.

In the heat-sealable heat-sensitive film configured as described above, the transparency is further improved. This can improve the visibility of the product inside the material to be sealed, such as a container.

Further, in the heat-sealable heat-sensitive film according to claim 7, a haze value (%) of a portion where the heat-sensitive recording layer and the protective layer are provided is 4.6 times or less the haze value (%) of the substrate.

In the heat-sealable heat-sensitive film configured as described above, the transparency is further improved. This can improve the visibility of the product inside the material to be sealed, such as a container.

Further, in the heat-sealable heat-sensitive film according to claim 8, color developing temperature of the heat-sensitive recording layer is higher than temperature of thermal bonding to the material to be sealed.

In the heat-sealable heat-sensitive film configured as described above, color development of the heat-sensitive recording layer when thermal bonding to the material to be sealed can be avoided.

Further, in the heat-sealable heat-sensitive film according to claim 9, the substrate is a transparent substrate.

In the heat-sealable heat-sensitive film configured as described above, the transparency is further improved. This can improve the visibility of the product inside the material to be sealed, such as a container.

Further, in the heat-sealable heat-sensitive film according to claim 10, a pre-print layer is formed on the substrate.

In the heat-sealable heat-sensitive film configured as described above, an amount of information can be increased.

Further, in the heat-sealable heat-sensitive film according to claim 11, the heat-sensitive recording layer is provided at an appropriate portion combined with the pre-print layer so that a pre-printed portion and a printed portion are combined to form a single design.

In the heat-sealable heat-sensitive film configured as described above, the amount of information can be increased.

Further, a method (1) for producing a heat-sealable heat-sensitive film of the present invention is a method for producing the heat-sealable heat-sensitive film according to claims 1 to 11, the method including: a heat-sensitive recording layer forming step of forming a heat-sensitive recording layer in a portion of a substrate other than a portion that is thermally bonded to a material to be sealed.

According to the method for producing the heat-sealable heat-sensitive film configured as described above, the following heat-sealable heat-sensitive film can be produced. In the heat-sealable heat-sensitive film, color development of the heat-sensitive recording layer when thermal bonding to the material to be sealed is avoided, the range of selection of temperature for thermal bonding to the material to be sealed and printing temperature is widened, versatility increases, and customers have a wider selection of printers.

Further, a method (2) for producing a heat-sealable heat-sensitive film of the present invention is a method for producing the heat-sealable heat-sensitive film according to claim 2, the method including: a heat-sensitive recording layer forming step of forming a heat-sensitive recording layer in a portion of a substrate other than a portion that is thermally bonded to a material to be sealed and only where printing is planned.

According to the method for producing the heat-sealable heat-sensitive film configured as described above, the following heat-sealable heat-sensitive film can be produced. In the heat-sealable heat-sensitive film, the transparent portion of the heat-sealable heat-sensitive film can be secured to the maximum extent, and the visibility of the product inside the material to be sealed, such as a container, can be improved.

Further, in the method for producing the heat-sealable heat-sensitive film according to claim 14, the heat-sensitive recording layer forming step is performed using a register mark.

According to the method for producing the heat-sealable heat-sensitive film configured as described above, the following heat-sealable heat-sensitive film can be easily produced. In the heat-sealable heat-sensitive film, the transparent portion of the heat-sealable heat-sensitive film can be secured to the maximum extent, and the visibility of the product inside the material to be sealed, such as a container, can be improved.

Further, a method (3) for producing a heat-sealable heat-sensitive film of the present invention is a method for producing the heat-sealable heat-sensitive film according to claim 4 or 5, the method including: an anchor layer forming step of forming an anchor layer on an entire surface of a substrate; a heat-sensitive recording layer forming step of forming a heat-sensitive recording layer in a portion other than a portion that is thermally bonded to a material to be sealed, opposite to the substrate; and a protective layer forming step of forming a protective layer on an entire surface of the anchor layer on a side where the heat-sensitive recording layer is formed.

According to the method for producing the heat-sealable heat-sensitive film configured as described above, the following heat-sealable heat-sensitive film can be produced. In the heat-sensitive film, the adhesion strength between the substrate and the heat-sensitive recording layer and the adhesion strength between the substrate and the protective layer are high. Further, the heat-sensitive film can not only withstand the high temperature thermal printers, but also protect the heat seal bar.

A method (4) for producing a heat-sealable heat-sensitive film of the present invention is a method for producing the heat-sealable heat-sensitive film according to claim 10, the method including: a pre-printing step of forming a pre-print layer on a substrate; and a heat-sensitive recording layer forming step of forming, after the pre-printing step, a heat-sensitive recording layer at an appropriate portion combined with the pre-print layer so that a pre-printed portion and a printed portion are combined to form a single design, in a portion of the substrate other than a portion that is thermally bonded to a material to be sealed.

According to the method for producing the heat-sealable heat-sensitive film configured as described above, a heat-sealable heat-sensitive film with a large amount of information can be produced.

Further, in the method for producing the heat-sealable heat-sensitive film according to claim 17, the pre-printing step and the heat-sensitive recording layer forming step are performed using a register mark.

According to the method for producing the heat-sealable heat-sensitive film configured as described above, the heat-sealable heat-sensitive film with a large amount of information can be easily produced.

Further, in a roll paper of the present invention, the heat-sealable heat-sensitive film according to any one of claims 1 to 11 is continuously formed.

According to the roll paper configured as described above, color development of the heat-sensitive recording layer during thermal bonding is avoided, and the range of selection of the temperature for thermal bonding with the material to be sealed and the printing temperature is widened. This can provide a heat-sealable heat-sensitive film that increases versatility and gives customers a wider selection of printers.

### EFFECTS OF INVENTION

According to the present invention, it is possible to provide a heat-sealable heat-sensitive film and a method for producing the same as described below. In the heat-sensitive film, color development of the heat-sensitive recording layer during thermal bonding can be avoided, and the range of selection of the temperature for thermal bonding with the material to be sealed and the printing temperature can be widened. This increases versatility and gives customers a wider selection of printers.

### BRIEF DESCRIPTION OF DRAWINGS

Fig. 1 is a schematic diagram of an embodiment of a heat-sealable heat-sensitive film according to the present invention as viewed from above.
Fig. 2 is a diagram schematically illustrating an A-A cross-section of Fig. 1.
Fig. 3 is a diagram schematically illustrating a cross-section of another embodiment of the heat-sealable heat-sensitive film according to the present invention.
Fig. 4 is a diagram schematically illustrating a cross-section of still another embodiment of the heat-sealable heat-sensitive film according to the present invention.
Fig. 5 is a schematic diagram of yet another embodiment of the heat-sealable heat-sensitive film according to the present invention as viewed from above.
Fig. 6 is a diagram schematically illustrating a B-B cross-section of Fig. 5.
Fig. 7 is a diagram schematically illustrating a cross-section of yet another embodiment of the heat-sealable heat-sensitive film according to the present invention.
Fig. 8 is a diagram schematically illustrating a cross-section of yet another embodiment of the heat-sealable heat-sensitive film according to the present invention.
Fig. 9 is an explanatory diagram illustrating register marks used in a multicolor printing device in an embodiment of a method for producing a heat-sealable heat-sensitive film according to the present invention.
Fig. 10 is an explanatory diagram illustrating the register marks used in the multicolor printing device in another embodiment of the method for producing the heat-sealable heat-sensitive film according to the present invention.
Fig. 11 is a graph illustrating typical heat-sealing temperatures and printing temperatures.

### DESCRIPTION OF EMBODIMENTS

Hereinafter, embodiments of the present invention will be described in detail with reference to the drawings.

### [Heat-sealable heat-sensitive film]

The heat-sealable heat-sensitive film of the present invention is a heat-sealable heat-sensitive film that is thermally bonded to a material to be sealed, and includes a substrate and a heat-sensitive recording layer. The heat-sensitive recording layer is not provided in a portion of the substrate that is thermally bonded to the material to be sealed. Then, the heat-sensitive recording layer is provided in a portion of the substrate other than the portion of the substrate that is thermally bonded to the material to be sealed. In the present specification, thermally bonding the heat-sealable heat-sensitive film to the material to be sealed may be referred to as heat-sealing. Then, temperature at which heat-sealing is performed may be referred to as heat-sealing temperature. Further, in the heat-sensitive recording layer, a heat-sensitive color developing composition develops color through a chemical reaction when heated by a thermal head or the like, and a recorded image is obtained, which is referred to as printing. Then, temperature at which printing is performed is referred to as printing temperature.

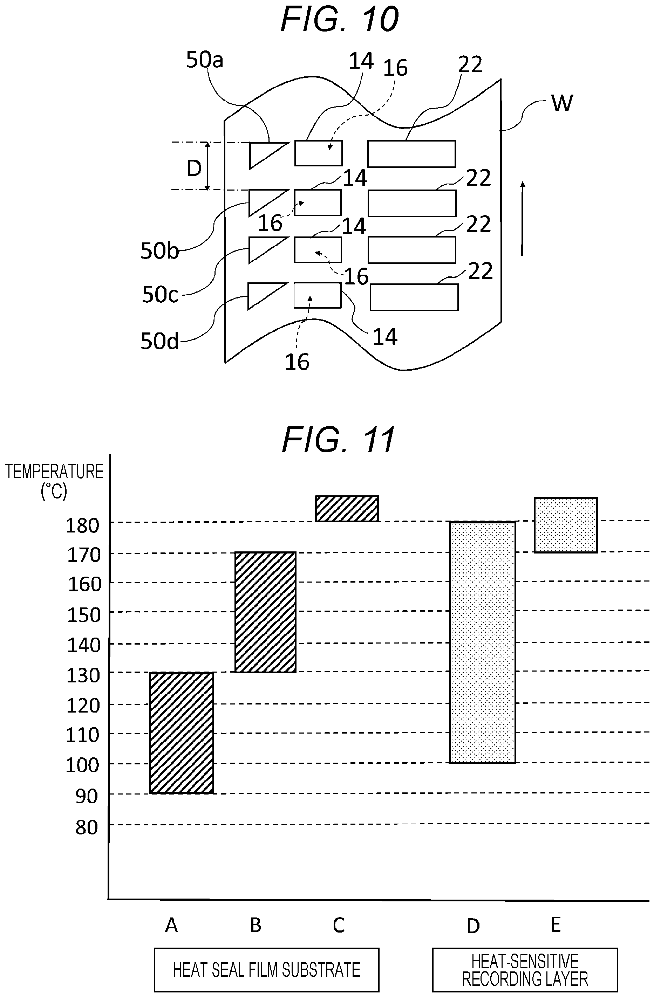

Fig. 11 illustrates typical heat-sealing temperatures and printing temperatures. As illustrated in Fig. 11, generally in many cases, there is a temperature range in which the heat-sealing temperature and the printing temperature overlap each other. Therefore, in the heat-sealable heat-sensitive film having the substrate and the heat-sensitive recording layer, it is necessary to avoid color development of the heat-sensitive recording layer during heat-sealing.

### First embodiment

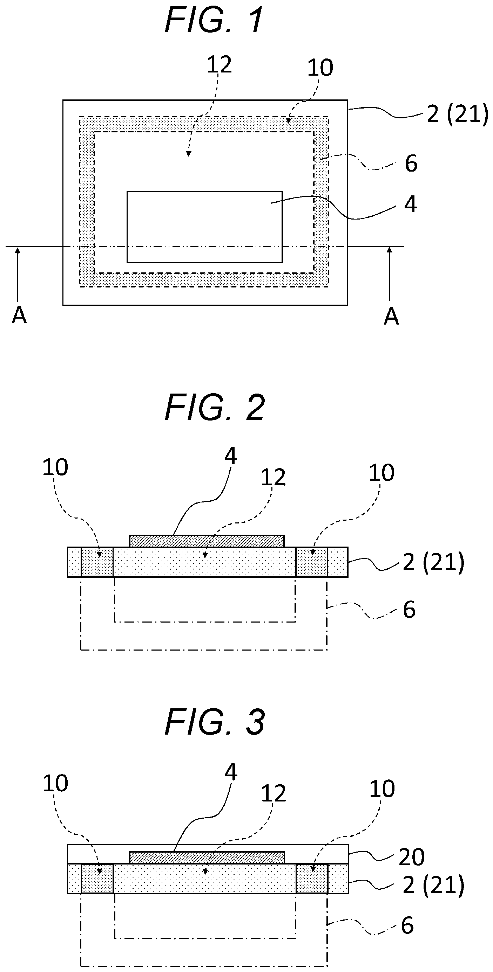

Fig. 1 and Fig. 2 schematically illustrating an A-A cross-section of Fig. 1 schematically illustrate an embodiment of the heat-sealable heat-sensitive film according to the present invention. Reference numeral 2 indicates the substrate, and reference numeral 4 indicates the heat-sensitive recording layer. Reference numeral 6 indicates the material to be sealed to which the heat-sealable heat-sensitive film is thermally bonded, and in Fig. 1, the material to be sealed is present below the heat-sealable heat-sensitive film. The substrate 2 includes a layer 21 having heat-sealability (here, a film having heat-sealability is used). The heat-sealable heat-sensitive film having the substrate 2 and a heat-sensitive recording layer 4 is heat-sealed to the material to be sealed 6 at a portion 10 where it is thermally bonded to the material to be sealed 6. In the substrate 2, the heat-sensitive recording layer 4 is not provided in the portion 10, and the heat-sensitive recording layer 4 is provided in a portion 12 other than the portion 10. Therefore, in the heat-sealable heat-sensitive film of a first embodiment, no heat is applied to the heat-sensitive recording layer 4 during heat-sealing with a heat seal bar. Therefore, the heat-sealing temperature can be freely set regardless of the printing temperature. Then, even when the printing temperature is lower than the heat-sealing temperature, color development of the heat-sensitive recording layer 4 can be avoided. This can increase versatility and give customers a wider selection of printers. The heat-sensitive recording layer 4 may be provided on an entire surface of the portion 12 other than the portion 10, or may be provided on a part of the surface of the portion 12.

### Second embodiment

Fig. 3 schematically illustrates another embodiment of the heat-sealable heat-sensitive film according to the present invention. The same reference numerals as in Figs. 1 and 2 indicate the same components. In the heat-sealable heat-sensitive film of a second embodiment, a protective layer 20 is provided on an entire surface on a side where the heat-sensitive recording layer 4 is provided. By providing the protective layer 20, the heat-sensitive film can not only withstand high temperature thermal printers but also be protected from the heat seal bar. In addition, the thermal printer and the heat seal bar can be protected.

### Third embodiment

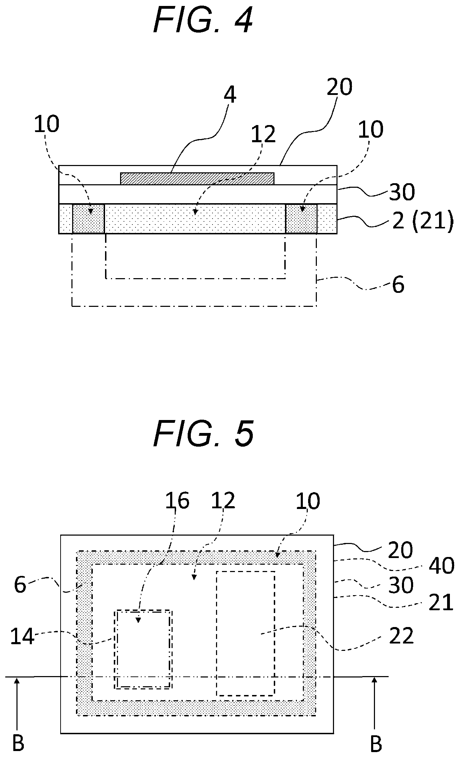

Fig. 4 schematically illustrates still another embodiment of the heat-sealable heat-sensitive film according to the present invention. The same reference numerals as in Figs. 1 to 3 indicate the same components. In the heat-sealable heat-sensitive film of a third embodiment, an anchor layer 30 is provided between portions where the substrate 2 and the heat-sensitive recording layer 4 are in contact with each other in the second embodiment illustrated in Fig. 3, and between portions where the substrate 2 and the protective layer 20 are in contact with each other in the second embodiment illustrated in Fig. 3. By providing the anchor layer 30, both an adhesion strength between the substrate 2 and the heat-sensitive recording layer 4 and an adhesion strength between the substrate 2 and the protective layer 20 can be improved.

### Fourth embodiment

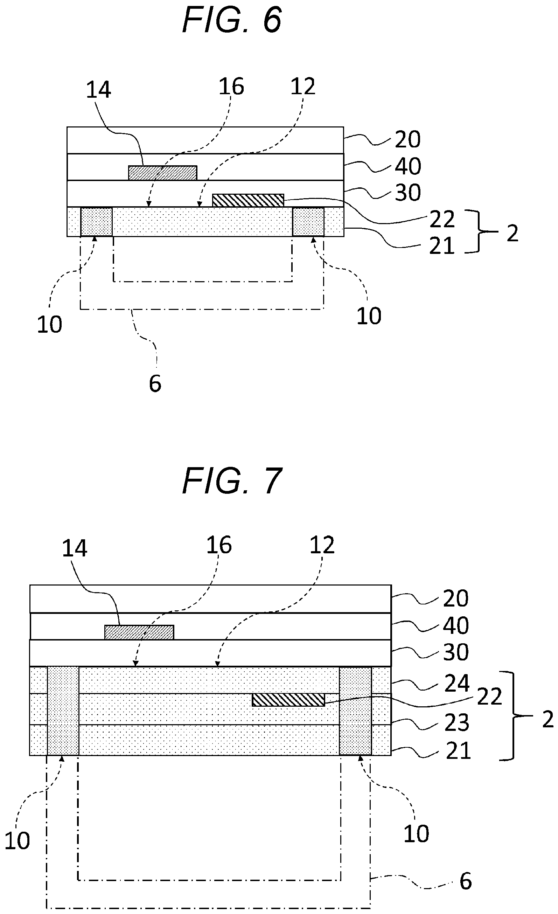

Fig. 5 and Fig. 6 schematically illustrating a B-B cross-section of Fig. 5 schematically illustrate yet another embodiment of the heat-sealable heat-sensitive film according to the present invention. The same reference numerals as in Figs. 1 to 4 indicate the same components. In the heat-sealable heat-sensitive film of a fourth embodiment, a heat-sensitive recording layer 14 is provided only in a portion 16 of the portion 12 other than the portion 10 where the substrate 2 is thermally bonded to the material to be sealed 6, where printing is planned. Therefore, a transparent portion of the heat-sealable heat-sensitive film can be secured to the maximum extent. This can improve visibility of the product inside the material to be sealed, such as a container. In the heat-sealable heat-sensitive film of the fourth embodiment, an intermediate layer 40 is further provided between the protective layer 20 and the heat-sensitive recording layer 14 and between the protective layer 20 and the anchor layer 30. The intermediate layer 40 can improve barrier properties against water and oil.

Further, in the heat-sealable heat-sensitive film of the fourth embodiment, the substrate 2 has a pre-print layer 22. The pre-print layer 22 is provided on a surface of the layer 21 having heat-sealability (here, the film having heat-sealability is used) on a side where the heat-sensitive recording layer 14 is provided. Since the substrate 2 has the pre-print layer 22, an amount of information of the heat-sealable heat-sensitive film can be increased. The heat-sensitive recording layer 14 may be provided at an appropriate portion combined with the pre-print layer 22 so that a pre-printed portion and a printed portion are combined to form a single design. Note that in the heat-sealable heat-sensitive film of the fourth embodiment, it is preferable that a film having heat-sealability on only one side of the film is used as the film having heat-sealability, and the pre-print layer 22 is provided on a side having no heat-sealability.

### Fifth embodiment

Fig. 7 schematically illustrates yet another embodiment of the heat-sealable heat-sensitive film according to the present invention. The same reference numerals as in Figs. 5 and 6 indicate the same components. In the heat-sealable heat-sensitive film of a fifth embodiment, the substrate 2 has a multilayer structure including a film 24 having no heat-sealability, the layer 21 having heat-sealability, and an adhesion layer 23. In this case, the pre-print layer 22 is provided on the film 24 having no heat-sealability and has a structure in which it is sandwiched between the film 24 having no heat-sealability and the adhesive layer 23, and is further covered with the layer 21 having heat-sealability.

### Sixth embodiment

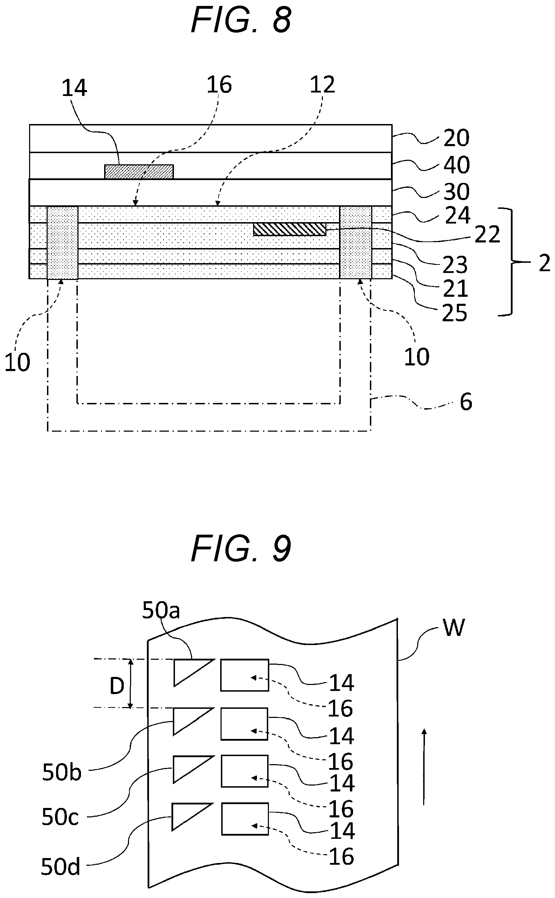

Fig. 8 schematically illustrates yet another embodiment of the heat-sealable heat-sensitive film according to the present invention. The same reference numerals as in Fig. 7 indicate the same components. In the heat-sealable heat-sensitive film of a sixth embodiment, the substrate 2 further has a functional paint layer 25. By having the functional paint layer, antifogging properties and an effect of suppressing static electricity generation can be obtained.

### <Substrate>

The substrate may be any material having heat-sealability, and an example thereof is an amorphous film having heat-sealability. The substrate is preferably transparent. Thus, the visibility inside a packaged container can be further improved.

The amorphous film can include any suitable resin and typically includes an amorphous component. An amount of the amorphous component in the resin constituting the amorphous film is preferably 12 mol% or more, more preferably 13 mol% or more, and still more preferably 14 mol% or more. An upper limit of the amount of the amorphous component is preferably 30 mol%, more preferably 29 mol%, and still more preferably 28 mol%. This can impart heat-sealability to the amorphous film.

Examples of the resin used for the amorphous film having heat-sealability include polyester-based resins. The polyester-based resin contains an ethylene terephthalate unit as a main component and one or more monomer components that can be the amorphous component. Examples of monomers of a carboxylic acid component that can be the amorphous component include isophthalic acid, 1,4-cyclohexanedicarboxylic acid, and 2,6-naphthalene dicarboxylic acid. Examples of a diol component monomer that can be the amorphous component include neopentyl glycol, 1,4-cyclohexanedimethanol, 2,2-diethyl-1,3-propanediol, 2-n-butyl-2-ethyl-1,3-propanediol, 2,2-isopropyl-1,3-propanediol, 2,2-di-n-butyl-1,3-propanediol, and hexanediol. Among them, isophthalic acid, neopentyl glycol, and 1,4-cyclohexanedimethanol are preferred. Further, other dicarboxylic acid components and/or diol components constituting the polyester-based resin may be included. Examples of the other dicarboxylic acid components include aromatic dicarboxylic acids such as orthophthalic acid, aliphatic dicarboxylic acids such as adipic acid, azelaic acid, sebacic acid, and decanedicarboxylic acid, and alicyclic dicarboxylic acids. Examples of the other diol components include long chain diols such as diethylene glycol and 1,4-butanediol, aliphatic diols such as hexanediol, and aromatic diols such as bisphenol A.

The substrate may contain various additives in addition to the resin described above. Examples of the additives include waxes, antioxidants, antistatic agents, crystal nucleating agents, thinning agents, heat stabilizers, coloring pigments, coloring inhibitors, and ultraviolet absorbers. Further, fine particles may be added as a lubricant to improve slipperiness of the film. Examples of the fine particles include inorganic fine particles such as silica, alumina, titanium dioxide, calcium carbonate, kaolin, and barium sulfate, and organic fine particles such as acrylic resin particles, melamine resin particles, silicone resin particles, and crosslinked polystyrene particles.

The substrate can be produced by melt-extruding the above-mentioned constituent materials using an extruder to form an unstretched film, and, if necessary, stretching the above-mentioned constituent materials under any appropriate stretching conditions (stretching temperature, stretching ratio, stretching direction). The film may be unstretched, but from the viewpoint of film strength and productivity, it is preferably a film obtained by biaxial stretching. An amorphous film configured to contain a polyester resin can be produced by selecting types and amounts of the dicarboxylic acid component and the diol component so as to contain an appropriate amount of monomers that can be amorphous components, and polycondensing them.

A thickness of the substrate is, for example, preferably 10 µm to 200 µm, more preferably 15 µm to 100 µm, and still more preferably 20 µm to 70 µm.

The substrate may be a material (film) having heat-sealability laminated on a material (film) having no heat-sealability using the adhesive layer (for example, modified alkyd resin). A material to be laminated may be any material having heat-sealability, and for example, films such as low density polyethylene (LDPE), high density polyethylene (HDPE), unoriented polypropylene (CPP), biaxially oriented polypropylene (OPP), and ethylene vinyl acetate copolymer (EVA) are preferably used. Note that polyolefin resins such as polyethylene and polypropylene; vinyl acetate-based resins (olefin-vinyl acetate copolymers and the like) such as ethylene-vinyl acetate copolymers; acrylic resins [an olefin-(meth)acrylic acid copolymer, a metal crosslinked product thereof, and the like] such as ethylene-(meth)acrylic acid copolymers and ionomers; and the like may be used. Further, the material to be laminated may also be formed using a known heat-sealing adhesive. Note that in order to improve the visibility of the product inside the material to be sealed, such as a container, it is preferable to use a member that is transparent after being formed. Further, from the viewpoint of transparency and sealing strength, a thickness of the material having heat-sealability is preferably 1 to 50 µm, and more preferably 10 to 30 µm. Furthermore, a material in which the functional paint layer made of functional paint (for example, surfactant such as polyglycerol fatty acid ester) is laminated on the material having heat-sealability can also be suitably used.

The substrate preferably has a three-layer structure in which the adhesive layer and a material layer having heat-sealability are laminated in this order on the material having no heat-sealability, and more preferably has a four-layer structure in which the functional paint layer is further laminated on the material having heat-sealability. In these substrates, when the protective layer is applied and formed, an increase in HAZE is suppressed, and a film with excellent transparency can be formed. HAZE can be measured in accordance with JIS K7361-1, K7136, K7105, ASTM D1003, ISO13468, and IS 14782 using Haze mater NDH 7000 manufactured by NIPPON DENSHOKU INDUSTRIES CO., LTD.

As shown in Table 1 below, suppression of increase in haze and the visibility when any of protective layers A to C was applied and formed were checked for a substrate having a four-layer structure including the material having no heat-sealability, an adhesion layer A or B, a sealant layer A or B, and a functional paint layer A or B; a substrate having a three-layer structure including the material having no heat-sealability, the adhesion layer A, and the sealant layer A; and a substrate including a heat seal film A or B. As a result, as shown in Table 1 below, good results were obtained. Note that the haze was measured by a method described above, and the visibility was evaluated by a sensory test based on the following evaluation criteria.
A: can be visually recognized without any problem
B: can be visually recognized but looks a little cloudy
C: can be visually recognized but looks cloudy

**[Table 1]**

| **Composition of substrate** | | **Protective layer** | **HAZE (%)** | | **HAZE Change rate** | **Visibility (Sensory test)** |
|---|---|---|---|---|---|---|
| | | | **Substrate** | **Substrate + Protective layer** | | |
| **1** | **PET#12 (material having no heat-sealability)/adhesive layer A/sealant layer A#30 (material layer having heat-sealability)/functional paint layer A** | **A** | **5.9** | **10.4** | **1.8** | **A** |
| **2** | **PET#12 (material having no heat-sealability)/adhesive layer B/sealant layer B#31 (material layer having heat-sealability)/functional paint layer B** | **A** | **6.4** | **13.2** | **2.1** | **A** |
| **3** | **PET#12 (material having no heat-sealability)/adhesive layer A/sealant layer A#30 (material layer having heat-sealability)** | **A** | **5.8** | **13.8** | **2.4** | **A** |
| **4** ' | **Heat seal film A (material having heat-sealability)** | **A** | **3.3** | **13.6** | **4.1** | **A** |
| **5** | **Heat seal film B (material having heat-sealability)** | **A** | **2.3** | **8.9** | **3.9** | **A** |
| **6** | **PET#12 (material having no heat-sealability)/adhesive layer A/sealant layer A#30 (material layer having heat-sealability)/functional paint layer A** | **B** | **5.9** | **26.9** | **4.6** | **B** |
| **7** | **PET#12 (material having no heat-sealability)/adhesive layer A/sealant layer A#30 (material layer having heat-sealability)/functional paint layer A** | **C** | **5.9** | **31.0** | **5.3** | **C** |

### <Heat-sensitive recording layer>

The heat-sensitive recording layer contains a color developing material that develops color when heated. The color developing material is not particularly limited as long as it can develop color when heated. As the color developing material, a dye capable of developing color alone may be used, or a transparent or light-colored dye (leuco dye) and a color developer capable of allowing this dye to develop color when heated may be used in combination. The color developing material that combines the leuco dye and the color developer is also used in general heat-sensitive recording paper and the like, and is easily available and highly versatile. Color developing temperature (the printing temperature) of the heat-sensitive recording layer is preferably higher than temperature of thermal bonding to the material to be sealed (the heat-sealing temperature), and more preferably 10°C or more higher than the heat-sealing temperature.

As the leuco dye, known ones can be used, and examples of the leuco dye include various leuco dyes such as triphenylmethanephthalide type, triallylmethane type, fluoran type, phenotidian type, thiofluoran type, xanthene type, indophthalyl type, spiropyran type, azaphthalide type, chromenopyrazole type, methine type, rhodamine anilinolactam type, rhodamine lactam type, quinazoline type, diazaxanthene type, and bislactone type. One leuco dye may be used alone. Note that printing in a desired color can be performed by using two or more types of leuco dyes in combination.

As the color developer, an electron acceptor such as an acidic substance can be used. The color developer can be appropriately selected depending on a type of the leuco dye. As the color developer, known ones can be used. Examples of the color developer include organic acids such as benzoic acid, metal salt-based compounds of organic acids such as zinc salicylate, phenol-based compounds such as p-octylphenol, thiophenol-based compounds such as 4-4'thiobis(6-t-butyl-2-methyl phenol), thiourea derivatives such as N-N'-diphenylthiourea, and diphenylsulfone-based compounds such as 3,3'-diallyl-4,4'-dihydroxydiphenylsulfone. One of these color developers can be used alone or two or more thereof can be used in combination.

Furthermore, the heat-sensitive recording layer may contain other materials such as fillers, binders, and lubricants, if necessary. Details of the materials that can be included in the heat-sensitive recording layer are described in, for example, WO 2015/072411 A. The entire description of WO 2015/072411 A is incorporated herein by reference.

Examples of the fillers include kaolin and calcium carbonate. A particle size thereof is preferably 1.0 µm or less.

Examples of the binder include styrene-butadiene copolymer.

Examples of the lubricants include polyethylene, zinc stearate, and paraffin. The particle size thereof is preferably 0.5 µm or less.

In order to improve transparency, it is particularly effective to include paraffin. The paraffin is preferably a paraffin having a low melting point below the color developing temperature of the heat-sensitive recording layer, preferably below 80°C, and more preferably below 50°C.

The particle size of this low melting point paraffin is preferably 0.5 µm or less. The content of this paraffin is preferably, for example, 0. 1 to 1.0 g/m² in terms of dry weight.

In this way, by containing the low melting point paraffin, when a coating liquid for forming a heat-sensitive layer is applied onto the substrate and dried, the paraffin melts and enters into gaps such as irregularities on surfaces of the particles constituting the heat-sensitive recording layer, and fills the gaps. This can suppress diffused reflection on the surfaces of the particles and further improve transparency.

### <Protective layer>

The protective layer protects surface irregularities and materials with high hardness of the substrate and the heat-sensitive recording layer, suppresses friction between them and the thermal head, and suppresses wear of the thermal head. Further, the protective layer preferably improves matching properties of the heat-sensitive film to the thermal head and promotes smooth color development of the heat-sensitive recording layer. In the protective layer, the filler, the lubricant, crosslinking agent, and the like are preferably added into the binder.

Examples of the resin that is the binder include acrylic resin.

Examples of the lubricant include polyethylene and zinc stearate.

Examples of the crosslinking agent include zirconium carbonate.

Examples of the filler include colloidal silica, calcium carbonate, polymethyl methacrylate (PMMA), and polystyrene (PS).

The particle size of the fillers is preferably 1.0 µm or less.

The protective layer may have an anti-diffused reflection layer made of colloidal silica. The particle size of the colloidal silica is preferably 1.0 µm or less. With such a configuration, heat resistance and transparency of the heat-sealable heat-sensitive film can be improved. This makes it possible to improve the visibility of the product inside the material to be sealed, such as a container, while providing heat resistance to the heat-sealable heat-sensitive film.

### <Anchor layer>

A substance included in the anchor layer can be determined as appropriate depending on what function is to be imparted to an upper or lower layer of the anchor layer. The anchor layer preferably improves both the adhesion strength between the substrate and the heat-sensitive recording layer and the adhesion strength between the substrate and the protective layer. In this case, for example, styrene-acrylic copolymer resin is preferred.

Usually, the anchor layer has a role of adhesion to the substrate and adhesion to the heat-sensitive recording layer. It is also important that the adhesion strength does not decrease even if the protective layer is formed. In particular, when forming the heat-sensitive recording layer by pattern coating of providing the heat-sensitive recording layer only on a portion where printing is planned, the role of adhesion to the protective layer is more important than in normal cases. Providing the anchor layer is preferable because it further increases the adhesion strength between the substrate and the protective layer. When the anchor layer is not provided, even when there is no problem in the adhesion strength between the substrate and the heat-sensitive recording layer, the adhesion strength may decrease when the protective layer is coated. In the present invention, it is preferable that the anchor layer that is in close contact with three layers of the substrate, the heat-sensitive recording layer, and the protective layer is provided.

### <Pre-print layer>

The pre-print layer can be typically formed by pre-printing a material constituting the pre-print layer at an appropriate portion on the substrate, for example, as described in the fourth to sixth embodiments. Specifically, in the fourth embodiment, the pre-print layer is provided on a surface having no heat-sealability of a film having heat-sealability on one side, the surface being provided with a heat-sensitive recording layer. Further, in the fifth and sixth embodiments, the pre-print layer is pre-printed on the film having no heat-sealability. Then, the pre-print layers are preferably covered with the intermediate layer, the protective layer, or the like from the viewpoint of preventing defective printing.

Examples of the material constituting the pre-print layer include the coating liquid containing dyes, pigments, metals, binder component materials, solvents, other components, and the like. Further, the material may contain metals. The pre-print layer may be formed by depositing metal onto a surface of the substrate. The type of metal is not particularly limited, and for example, aluminum, aluminum alloy, copper, copper alloy (copper-nickel alloy, copper-zinc alloy, or the like), silver, silver alloy, or the like can be used. A form of the metal may be any form such as metal powder, metal flakes, and metal fibers. The pre-print layer containing these metals has excellent design properties and is also excellent in light shielding properties.

As a method for pre-printing the materials on the surface of the substrate, any appropriate method can be adopted depending on use of the heat-sealable heat-sensitive film and compatibility with the substrate. Examples of the method include gravure printing, offset printing, rotary letterpress printing, UV printing, and silk screen printing.

### intermediate layer>

In the heat-sealable heat-sensitive film of the present invention, the intermediate layer having barrier properties against water and oil may be provided between the heat-sensitive recording layer and the protective layer.

The intermediate layer is mainly made of a resin. Examples of the resin for the intermediate layer include acrylic resin emulsions, water-soluble resins such as polyvinyl alcohol (PVA) resins, and SBR resins.

In order to improve transparency, the resin is preferably a resin having a water-soluble portion, for example, a polyvinyl alcohol (PVA) resin which is a resin having a hydroxy group as a hydrophilic structural unit, or a resin with a core-shell structure in which hydrophobic core particles are coated with a water-soluble shell polymer, for example, a core-shell type acrylic resin or the like.

Water-soluble polyvinyl alcohol (PVA) and core-shell type acrylic resin have good film-forming properties. When the coating liquid for forming the intermediate layer is applied onto the heat-sensitive recording layer and dried, the resin having a water-soluble portion permeates the heat-sensitive recording layer, and forms a smooth intermediate layer. Therefore, the diffused reflection on the heat-sensitive recording layer is suppressed, and the transparency is further improved.

Core-shell type resins are conventionally known. Examples of the core-shell type acrylic resin include one commercially available under the name of BARIASTAR (manufactured by Mitsui Chemicals, Inc.).

### <Haze value (%)>

A haze value (%) of a portion of the heat-sealable heat-sensitive film where the heat-sensitive recording layer and the protective layer are provided is preferably 4.6 times or less than the haze value (%) of the substrate, and more preferably 2.2 times or less. In such a case, it is possible to provide a heat-sealable heat-sensitive film having high visibility of the product inside the material to be sealed, such as a container, without significantly impairing the transparency of the heat-sealable heat-sensitive film. Conventional heat-sensitive recording layers often have low transparency. In contrast, in the heat-sealable heat-sensitive film of the present invention, the substrate is preferably provided with the heat-sensitive recording layer and the protective layer, so that an increase in haze value (%) can be suppressed and the transparency can be ensured.

### <Heat-sealability>

Regarding the heat-sealability of the heat-sealable heat-sensitive film, for example, heat seal strength when two top seal films are heat-sealed at a temperature of 160°C, a seal bar pressure of 2 MPa, and a sealing time of 2 seconds is preferably 0.5 N/15 mm or more. By having such heat seal strength, with the top seal films, opening of a container having an opening can more preferably be top sealed by heat sealing. The heat seal strength is more preferably 1.0 N/15 mm or more, still more preferably 2.0 N/15 mm or more, even more preferably 2.5 N/15 mm or more, and particularly preferably 3.0 N/15 mm or more. The heat seal strength is preferably high. However, the heat seal strength is preferably 2.5 N/15 mm or less in practical terms.

With the heat-sealable heat-sensitive film of the present invention, it is possible to avoid color development of the heat-sensitive recording layer during thermal bonding, and to widen a range of selection of temperature for thermal bonding with the material to be sealed and printing temperature. This increases versatility and gives customers a wider selection of printers.

### [Method for producing heat-sealable heat-sensitive film]

### Method (1) for producing heat-sealable heat-sensitive film

A method (1) for producing the heat-sealable heat-sensitive film of the present invention includes a heat-sensitive recording layer forming step of forming a heat-sensitive recording layer in a portion of the substrate other than a portion of the substrate that is thermally bonded to the material to be sealed. In the heat-sensitive recording layer forming step, the heat-sensitive recording layer is preferably formed by partially applying paint for forming heat-sensitive recording layer onto the substrate. According to the method (1) for producing the heat-sealable heat-sensitive film of the present invention, the following heat-sealable heat-sensitive film can be produced. In the heat-sensitive film, color development of the heat-sensitive recording layer when thermal bonding to the material to be sealed is avoided, the range of selection of temperature for thermal bonding to the material to be sealed and printing temperature is widened, versatility increases, and customers have a wider selection of printers.

### Method (2) for producing heat-sealable heat-sensitive film

A method (2) for producing the heat-sealable heat-sensitive film of the present invention includes a heat-sensitive recording layer forming step of forming a heat-sensitive recording layer in a portion of a substrate other than a portion that is thermally bonded to a material to be sealed and only where printing is planned. In the heat-sensitive recording layer forming step, it is preferable to form the heat-sensitive recording layer by applying paint for forming the heat-sensitive recording layer onto only a portion of the substrate where printing is planned. According to the method (2) for producing the heat-sealable heat-sensitive film of the present invention, the following heat-sealable heat-sensitive film can be produced. In the heat-sensitive film, color development of the heat-sensitive recording layer when thermal bonding to the material to be sealed is avoided, the range of selection of temperature for thermal bonding to the material to be sealed and printing temperature is widened, versatility increases, and customers have a wider selection of printers. Furthermore, it is possible to produce a heat-sealable heat-sensitive film capable of securing the transparent portion of the heat-sealable heat-sensitive film to the maximum extent and improving the visibility of the product inside the material to be sealed, such as a container.

The heat-sensitive recording layer forming step is preferably performed using a register mark. Formation of the heat-sensitive recording layer using the register mark can be performed with a general-purpose multicolor printing device. Specifically, for example, registering mark is performed as follows. That is, as illustrated in Fig. 9, while reading register marks 50a, 50b, 50c, and 50d, which are placed in advance in a feeding direction (an arrow direction in Fig. 9) of a printed circuit board W so as to be lined up at a constant distance D in a vertical direction, with a registering means (not illustrated), the heat-sensitive recording layer is formed at a position a certain distance apart in a width direction from each position between the register marks 50a, 50b, 50c, and 50d. In this way, by forming the heat-sensitive recording layer using the register marks, it is possible to easily produce a heat-sealable heat-sensitive film having the heat-sensitive recording layer 14 formed only in the portion 16 where printing is planned.

### Method (3) for producing heat-sealable heat-sensitive film

A method (3) for producing the heat-sealable heat-sensitive film of the present invention includes:
(i) an anchor layer forming step of forming an anchor layer on an entire surface of a substrate;
(ii) a heat-sensitive recording layer forming step of forming a heat-sensitive recording layer in a portion other than a portion that is thermally bonded to a material to be sealed, on a surface of the anchor layer opposite to the substrate; and
(iii) a protective layer forming step of forming a protective layer on an entire surface of the anchor layer on a side where the heat-sensitive recording layer is formed.

The anchor layer, the heat-sensitive recording layer, and the protective layer can be respectively formed by applying paint for forming the anchor layer, the paint for forming the heat-sensitive recording layer, and paint for forming the protective layer.

When the intermediate layer is provided on the heat-sensitive recording layer, after the heat-sensitive recording layer forming step, the coating liquid for forming the intermediate layer is applied to the entire surface on the side where the heat-sensitive recording layer is formed and dried to form the intermediate layer. Thereafter, in the protective layer forming step, the paint for forming the protective layer is applied onto the intermediate layer to form the protective layer.

In the method (3) for producing the heat-sealable heat-sensitive film of the present invention, the anchor layer is formed between the substrate and the heat-sensitive recording layer, and between the substrate and the protective layer. Therefore, by appropriately selecting a material of the anchor layer, the following heat-sealable heat-sensitive film can be produced. In the heat-sensitive film, the adhesion strength between the substrate and the heat-sensitive recording layer and the adhesion strength between the substrate and the protective layer are high. Further, the heat-sensitive film can not only withstand the high temperature thermal printers, but also protect the heat seal bar.

### Method (4) for producing heat-sealable heat-sensitive film

A method (4) for producing the heat-sealable heat-sensitive film of the present invention includes: a pre-printing step of forming a pre-print layer on a substrate; and a heat-sensitive recording layer forming step of forming, after the pre-printing step, a heat-sensitive recording layer at an appropriate portion combined with the pre-print layer so that a pre-printed portion and a printed portion are combined to form a single design, in a portion of the substrate other than a portion that is thermally bonded to a material to be sealed. According to the method (4) for producing the heat-sealable heat-sensitive film of the present invention, a heat-sealable heat-sensitive film with a large amount of information can be produced.

The pre-printing step and the heat-sensitive recording layer forming step are preferably performed using the register mark. The formation of the heat-sensitive recording layer using the register mark can be performed with the general-purpose multicolor printing device. Specifically, for example, the mark registering is performed as follows. That is, as illustrated in Fig. 10, while reading the register marks 50a, 50b, 50c, and 50d, which are placed in the feeding direction (an arrow direction in Fig. 10) of the printed circuit board W so as to be lined up in a vertical direction at a constant distance D, with the registering means (not illustrated), the heat-sensitive recording layer is formed at a position a certain distance apart in the width direction from each position between the register marks 50a, 50b, 50c, and 50d. In this way, by forming the pre-print layer and the heat-sensitive recording layer using the register marks, it is possible to easily produce the following heat-sealable heat-sensitive film. In the heat-sensitive film, the heat-sensitive recording layer 14 is formed at an appropriate portion combined with the pre-print layer 22 so that the pre-printed portion and the printed portion are combined to form a single design.

### [Roll paper]

In a roll paper of the present invention, the heat-sealable heat-sensitive film of the present invention is continuously formed. With the roll paper, color development of the heat-sensitive recording layer during thermal bonding is avoided, and the range of selection of the temperature for thermal bonding with the material to be sealed and the printing temperature is widened. This increases versatility and gives customers a wider selection of printers.

### Examples

The present invention will be described in more detail below based on Examples. Note that in the following, parts mean parts by mass.

### Example 1

A transparent amorphous film #30 (thickness: 30 µm) having heat sealability was used as the substrate. As illustrated in Fig. 2, coating liquid for forming the heat-sensitive recording layer containing a color former that develops color when heated, a color developer, a filler, a binder, a lubricant, or the like was applied to a portion of a substrate other than a portion (10) that is thermally bonded to a material to be sealed, so that a coating amount was 4.0 g/m² in terms of dry weight, and dried to form the heat-sensitive recording layer and obtain a heat-sealable heat-sensitive film 1. The heat-sensitive recording layer was formed using the register mark with the general-purpose multicolor printing device.

The heat-sealable heat-sensitive film 1 was thermally bonded to the material to be sealed. As a result, color development of the heat-sensitive recording layer during thermal bonding was avoided. The color developing temperature of the heat-sensitive recording layer was 130°C, and the heat-sealing temperature was 150°C.

### Example 2

The heat-sensitive recording layer in Example 1 was formed only in a portion where printing was planned, which was a narrower area than in Example 1. Except for this, a heat-sealable heat-sensitive film 2 was obtained in the same manner as in Example 1. Printing was performed on the heat-sealable heat-sensitive film 2 with a thermal printer. The results showed durability against a high-temperature thermal printer. Furthermore, the heat-sealable heat-sensitive film 2 was thermally bonded to the material to be sealed. As a result, color development of the heat-sensitive recording layer during thermal bonding was avoided.

### Example 3

Paint for forming the protective layer, the paint containing 11 parts of polyethylene, 4 parts of zinc stearate, 46 parts of acrylic, 6 parts of Zr carbonate, and 43 parts of colloidal silica (particle size: 1.0 µm or less) was applied to the entire surface of the heat-sensitive recording layer of the heat-sealable heat-sensitive film 1 obtained in Example 1 and of a substrate layer on which the heat-sensitive recording layer was not formed, so that the coating amount was 4.0 g/m² in terms of dry weight, and then dried to form the protective layer and obtain a heat-sealable heat-sensitive film 3. The anti-diffused reflection layer made of colloidal silica with a particle size of 1.0 µm or less was formed on the protective layer.

Printing was performed on the obtained heat-sealable heat-sensitive film 3 with the thermal printer. The results showed durability against the high-temperature thermal printer. Furthermore, the heat-sealable heat-sensitive film 3 was thermally bonded to the material to be sealed. As a result, color development of the heat-sensitive recording layer during thermal bonding was avoided, and the heat seal bar was also protected.

Further, the haze value (%) of the portion of the heat-sealable heat-sensitive film 3 where the heat-sensitive recording layer and the protective layer were provided on the substrate was approximately four times the haze value (%) of the substrate. Note that HAZE was measured in accordance with JIS K7361-1, K7136, K7105, ASTM D1003, ISO13468, and IS14782 using Haze mater NDH 7000 manufactured by NIPPON DENSHOKU INDUSTRIES CO., LTD.

### Example 4

A protective layer was formed, in the same manner as in Example 3, on the entire surface of the heat-sensitive recording layer of the heat-sealable heat-sensitive film 2 obtained in Example 2 and of the substrate layer on which the heat-sensitive recording layer was not formed, to obtain a heat-sealable heat-sensitive film 4. The anti-diffused reflection layer made of colloidal silica with a particle size of 1.0 µm or less was formed on the protective layer.

Printing was performed on the obtained heat-sealable heat-sensitive film 4 with the thermal printer. The results showed durability against the high-temperature thermal printer. Furthermore, the heat-sealable heat-sensitive film 4 was thermally bonded to the material to be sealed. As a result, color development of the heat-sensitive recording layer during thermal bonding was avoided, and the heat seal bar was also protected.

Further, the haze value (%) of the portion of the heat-sealable heat-sensitive film 4 where the heat-sensitive recording layer and the protective layer were provided on the substrate was measured in the same manner as in Example 3. As a result, the haze value (%) of the portion where the heat-sensitive recording layer and the protective layer were provided on the substrate was approximately four times the haze value (%) of the substrate.

### Example 5

The same substrate used in Example 1 was used as the substrate. Paint for forming the anchor layer, the paint containing acrylic acid resin was applied to the entire surface of the substrate so that the coating amount was 2.0 g/m² in terms of dry weight, and then dried to form the anchor layer on the substrate. The heat-sensitive recording layer was formed on the anchor layer in the same manner as in Example 1.

The protective layer was formed, in the same manner as in Example 3, on the entire surface of the heat-sensitive recording layer and of the anchor layer on which the heat-sensitive recording layer was not formed, to obtain a heat-sealable heat-sensitive film 5. The anti-diffused reflection layer made of colloidal silica with a particle size of 1.0 µm or less was formed on the protective layer.

Printing was performed on the obtained heat-sealable heat-sensitive film 5 with the thermal printer. The results showed durability against the high-temperature thermal printer. Furthermore, the heat-sealable heat-sensitive film 5 was thermally bonded to the material to be sealed. As a result, color development of the heat-sensitive recording layer during thermal bonding was avoided, and the heat seal bar was also protected.

Further, in the heat-sealable heat-sensitive film 5, the haze value (%) of a portion thereof where the anchor layer, the heat-sensitive recording layer, and the protective layer were provided on the substrate was measured in the same manner as in Example 3. As a result, the haze value (%) of the portion where the anchor layer, the heat-sensitive recording layer, and the protective layer were provided on the substrate was approximately four times the haze value (%) of the substrate.

### Example 6

The same substrate used in Example 2 was used as the substrate. The anchor layer was formed on the entire surface of the substrate in the same manner as in Example 5. The heat-sensitive recording layer was formed on the anchor layer in the same manner as in Example 2.

The protective layer was formed, in the same manner as in Example 3, on the entire surface of the heat-sensitive recording layer and of the anchor layer on which the heat-sensitive recording layer was not formed, to obtain a heat-sealable heat-sensitive film 6. The anti-diffused reflection layer made of colloidal silica with a particle size of 1.0 µm or less was formed on the protective layer.

Printing was performed on the obtained heat-sealable heat-sensitive film 6 with the thermal printer. The results showed durability against the high-temperature thermal printer. Furthermore, the heat-sealable heat-sensitive film 6 was thermally bonded to the material to be sealed. As a result, color development of the heat-sensitive recording layer during thermal bonding was avoided, and the heat seal bar was also protected.

Further, in the heat-sealable heat-sensitive film 6, the haze value (%) of a portion thereof where the anchor layer, the heat-sensitive recording layer, and the protective layer were provided on the substrate was measured in the same manner as in Example 3. As a result, the haze value (%) of the portion where the anchor layer, the heat-sensitive recording layer, and the protective layer were provided on the substrate was approximately four times the haze value (%) of the substrate.

For the heat-sealable heat-sensitive films 3 to 6 obtained in Examples 3 to 6, adhesiveness between layers was evaluated according to the following criteria based on the degree of peeling when cellophane tape (registered trademark) was attached and peeled off. The results are shown in Table 2.
A: No peeling
B: Almost no peeling
C: Some peeling

**[Table 2]**

| | **Lower layer** | **Upper layer** | **Adhesiveness** |
|---|---|---|---|
| **Heat-sealable heat-sensitive film 3** | **Substrate** | **Heat-sensitive recording layer** | **A** |
| | **Substrate** | **Protective layer** | **c.** |
| | **Heat-sensitive recording layer** | **Protective layer** | **B** |
| **Heat-sealable heat-sensitive film 4** | **Substrate** | **Heat-sensitive recording layer** | **B** |
| | **Substrate** | **Protective layer** | **C** |
| | **Heat-sensitive recording layer** | **Protective layer** | **C** |
| **Heat-sealable heat-sensitive film 5** | **Substrate** | **Anchor layer** | **A** |
| | **Anchor layer** | **Heat-sensitive recording layer** | **A** |
| | **Heat-sensitive recording layer** | **Protective layer** | **A** |
| | **Anchor layer** | **Protective layer** | **A** |
| **Heat-sealable heat-sensitive film 6** | **Substrate** | **Anchor layer** | **A** |
| | **Anchor layer** | **Heat-sensitive recording layer** | **A** |
| | **Heat-sensitive recording layer** | **Protective layer** | **A** |
| | **Anchor layer** | **Protective layer** | **A** |

As shown in Table 2, in the heat-sealable heat-sensitive films 5 and 6 obtained in Examples 5 and 6, by providing the anchor layer, adhesion strengths between the layers in the heat-sealable heat-sensitive films were further increased.

### Example 7

As the substrate, a substrate having a four-layer structure including PET #12 (thickness: 12 µm)/adhesive layer/sealant layer #30 (layer having heat sealability, thickness: 30 µm)/functional paint layer was used. The anchor layer, the heat-sensitive recording layer, and the protective layer were provided, in the same manner as in Example 5, on the entire surface of the PET film on a side where other layers were not formed, to obtain a heat-sealable heat-sensitive film 7. Note that the adhesive layer was made of a modified alkyd resin, the layer having heat sealability was made of a polypropylene film, and the functional paint layer was made of a polyglycerol fatty acid ester. The anti-diffused reflection layer made of colloidal silica with a particle size of 1.0 µm or less was formed on the protective layer.

Printing was performed on the obtained heat-sealable heat-sensitive film 7 with the thermal printer. The results showed durability against the high-temperature thermal printer. Furthermore, the heat-sealable heat-sensitive film 7 was thermally bonded to the material to be sealed. As a result, color development of the heat-sensitive recording layer during thermal bonding was avoided, and the heat seal bar was also protected. The color developing temperature of the heat-sensitive recording layer was 170°C, and the heat-sealing temperature was 165°C.

Further, the haze value (%) of the portion of the heat-sealable heat-sensitive film 7 where the anchor layer, heat-sensitive recording layer, and protective layer were provided on the substrate was 2.2 times or less the haze value (%) of the substrate. Note that HAZE was measured in the same manner as in Example 3.

### Example 8

As the substrate, a substrate having the same four-layer structure as in Example 7 including PET #12 (thickness: 12 µm)/adhesive layer/sealant layer #30 (layer having heat sealability, thickness: 30 µm)/functional paint layer was used. Except for this, a heat-sealable heat-sensitive film 8 was obtained in the same manner as in Example 6.

Printing was performed on the obtained heat-sealable heat-sensitive film 8 with the thermal printer. The results showed durability against the high-temperature thermal printer. Furthermore, the heat-sealable heat-sensitive film 8 was thermally bonded to the material to be sealed. As a result, color development of the heat-sensitive recording layer during thermal bonding was avoided, and the heat seal bar was also protected. The color developing temperature of the heat-sensitive recording layer was 130°C, and the heat-sealing temperature was 165°C.

Further, the haze value (%) of the portion of the heat-sealable heat-sensitive film 8 where the anchor layer, the heat-sensitive recording layer, and the protective layer were provided on the substrate was 4.6 times or less the haze value (%) of the substrate. Note that HAZE was measured in the same manner as in Example 3.

### Example 9

As the substrate, a heat seal film having heat-sealability on one side was used. The pre-print layer was formed on a surface having no heat-sealability of the substrate. The anchor layer was formed, in the same manner as in Example 6, on the entire surface of the substrate on a side where the pre-print layer was formed. The heat-sensitive recording layer was formed on the anchor layer in the same manner as in Example 2.

An intermediate layer made of an acrylic resin emulsion or the like was formed on the entire surface of the heat-sensitive recording layer and of the anchor layer on which the heat-sensitive recording layer was not formed. The protective layer was formed on the entire surface of the intermediate layer in the same manner as in Example 4, to obtain a heat-sealable heat-sensitive film 9. The anti-diffused reflection layer made of colloidal silica was formed on the protective layer. In the heat-sealable heat-sensitive film 9, the heat-sensitive recording layer was provided at an appropriate portion combined with the pre-print layer so that the pre-printed portion and the printed portion were combined to form a single design. Formation of the pre-print layer and the formation of the heat-sensitive recording layer were each performed using the register mark with the general-purpose multicolor printing device.

Printing was performed on the obtained heat-sealable heat-sensitive film 9 with the thermal printer. The results showed durability against the high-temperature thermal printer. Furthermore, the heat-sealable heat-sensitive film 9 was thermally bonded to the material to be sealed. As a result, color development of the heat-sensitive recording layer during thermal bonding was avoided. With the heat-sealable heat-sensitive film 9, it was possible to easily produce a heat-sealable heat-sensitive film with a particularly large amount of information.

Further, the haze value (%) of the portion of the heat-sealable heat-sensitive film 9 where the heat-sensitive recording layer, the intermediate layer, and the protective layer were provided on the substrate was 4.6 times or less the haze value (%) of the substrate. Note that HAZE was measured in the same manner as in Example 3.

### Example 10

### (Production of substrate having three-layer structure having pre-print layer)

The pre-print layer was pre-printed on a part of one side of a 12 µm thick PET film. The adhesive layer made of a modified alkyd resin was formed on the entire surface of the PET film on a side where the pre-print layer was formed. The polypropylene film was adhered to the entire surface of the adhesive layer to form the layer having heat-sealability and produce a substrate having a three-layer structure having a pre-print layer.

### (Production of heat-sealable heat-sensitive film using substrate having three-layer structure)

The anchor layer, the heat-sensitive recording layer, the intermediate layer, and the protective layer were formed, in the same manner as in Example 9, on a surface of the PET film on a side where other layers were not formed in the above-obtained substrate having a three-layer structure, to obtain a heat-sealable heat-sensitive film 10. Note that in the heat-sealable heat-sensitive film 10, the heat-sensitive recording layer was provided at an appropriate portion combined with the pre-print layer so that the pre-printed portion and the printed portion were combined to form a single design. The formation of the pre-print layer and the formation of the heat-sensitive recording layer were each performed using the register mark with the general-purpose multicolor printing device.

Printing was performed on the obtained heat-sealable heat-sensitive film 10 with the thermal printer. The results showed durability against the high-temperature thermal printer. Furthermore, the heat-sealable heat-sensitive film 10 was thermally bonded to the material to be sealed. As a result, color development of the heat-sensitive recording layer during thermal bonding was avoided. With the heat-sealable heat-sensitive film 10, it was possible to easily produce a heat-sealable heat-sensitive film with a particularly large amount of information.

Further, the haze value (%) of the portion of the heat-sealable heat-sensitive film 10 where the anchor layer, the heat-sensitive recording layer, the intermediate layer, and the protective layer were provided on the substrate was 4.6 times or less the haze value (%) of the substrate. Note that HAZE was measured in the same manner as in Example 3.

### Example 11

### (Production of substrate having four-layer structure having pre-print layer)

A functional paint layer made of polyglycerol fatty acid ester was formed on the entire surface of the layer having heat sealability of the substrate having a three-layer structure having a pre-print layer produced in Example 10, to produce the substrate having a four-layer structure having the pre-print layer.

### (Production of heat-sealable heat-sensitive film using substrate having four-layer structure)

The anchor layer, the heat-sensitive recording layer, the intermediate layer, and the protective layer were formed, in the same manner as in Example 9, on a surface of the PET film on a side where other layers were not formed in the above-obtained substrate having a four-layer structure, to obtain a heat-sealable heat-sensitive film 11. Note that in the heat-sealable heat-sensitive film 11, the heat-sensitive recording layer was provided at an appropriate portion combined with the pre-print layer so that the pre-printed portion and the printed portion were combined to form a single design. The formation of the pre-print layer and the formation of the heat-sensitive recording layer were each performed using the register mark with the general-purpose multicolor printing device.

Printing was performed on the obtained heat-sealable heat-sensitive film 11 with the thermal printer. The results showed durability against the high-temperature thermal printer. Furthermore, the heat-sealable heat-sensitive film 11 was thermally bonded to the material to be sealed. As a result, color development of the heat-sensitive recording layer during thermal bonding was avoided. With the heat-sealable heat-sensitive film 11, it was possible to easily produce a heat-sealable heat-sensitive film with a particularly large amount of information.

Further, the haze value (%) of a portion of the heat-sealable heat-sensitive film 11 where the anchor layer, the heat-sensitive recording layer, the intermediate layer, and the protective layer are provided on the substrate was 4.6 times or less the haze value (%) of the substrate. Note that HAZE was measured in the same manner as in Example 3. Note that the protective layer in the heat-sealable heat-sensitive film can be appropriately modified in various ways. The protective layer is not essential.

### INDUSTRIAL APPLICABILITY

The heat-sealable heat-sensitive film of the present invention can be used as the following heat-sealable heat-sensitive film. With the heat-sensitive film, color development of the heat-sensitive recording layer during thermal bonding is avoided, and the range of selection of the temperature for thermal bonding with the material to be sealed and the printing temperature is widened. This increases versatility and gives customers a wider selection of printers.

### LIST OF REFERENCE SIGNS

2: Substrate
21: Layer having heat-sealability
22: Pre-print layer
23: Adhesive layer
24: Layer having no heat-sealability
25: Functional paint layer
4, 14: Heat-sensitive recording layer
6: Material to be sealed
10: Portion of substrate that is thermally bonded to material to be sealed
12: Portion of substrate other than portion that is thermally bonded to material to be sealed
16: Portion where printing is planned
20: Protective layer
30: Anchor layer
40: Intermediate layer

## Claims

1. A heat-sealable heat-sensitive film comprising a substrate and a heat-sensitive recording layer and thermally bonded to a material to be sealed, wherein
the heat-sensitive recording layer is not provided in a portion of the substrate that is thermally bonded to the material to be sealed, and
the heat-sensitive recording layer is provided in a portion of the substrate other than the portion of the substrate that is thermally bonded to the material to be sealed.

2. The heat-sealable heat-sensitive film according to claim 1, wherein the heat-sensitive recording layer is provided only in a portion where printing is planned.

3. The heat-sealable heat-sensitive film according to claim 1 or 2, wherein a protective layer is provided on an entire surface of the substrate on a side where the heat-sensitive recording layer is provided.

4. The heat-sealable heat-sensitive film according to claim 3, wherein an anchor layer is provided in a portion where the substrate and the heat-sensitive recording layer are in contact with each other, and in a portion where the substrate and the protective layer are in contact with each other.

5. The heat-sealable heat-sensitive film according to any one of claims 3 to 4, wherein the protective layer has an anti-diffused reflection layer made of colloidal silica.

6. The heat-sealable heat-sensitive film according to claim 5, wherein a particle size of the colloidal silica is 1.0 µm or less.

7. The heat-sealable heat-sensitive film according to any one of claims 3 to 6, wherein a haze value (%) of a portion where the heat-sensitive recording layer and the protective layer are provided is 4.6 times or less the haze value (%) of the substrate.

8. The heat-sealable heat-sensitive film according to any one of claims 1 to 7, wherein color developing temperature of the heat-sensitive recording layer is higher than temperature of thermal bonding to the material to be sealed.

9. The heat-sealable heat-sensitive film according to any one of claims 1 to 8, wherein the substrate is a transparent substrate.

10. The heat-sealable heat-sensitive film according to any one of claims 1 to 9, wherein a pre-print layer is formed on the substrate.

11. The heat-sealable heat-sensitive film according to claim 10, wherein the heat-sensitive recording layer is provided at an appropriate portion combined with the pre-print layer so that a pre-printed portion and a printed portion are combined to form a single design.

12. A method for producing the heat-sealable heat-sensitive film according to claims 1 to 11, the method comprising a heat-sensitive recording layer forming step of forming a heat-sensitive recording layer in a portion of a substrate other than a portion that is thermally bonded to a material to be sealed.

13. A method for producing the heat-sealable heat-sensitive film according to claim 2, the method comprising a heat-sensitive recording layer forming step of forming a heat-sensitive recording layer in a portion of a substrate other than a portion that is thermally bonded to a material to be sealed and only where printing is planned.

14. The method for producing the heat-sealable heat-sensitive film according to claim 13, wherein the heat-sensitive recording layer forming step is performed using a register mark.

15. A method for producing the heat-sealable heat-sensitive film according to claim 4 or 5, the method comprising:
an anchor layer forming step of forming an anchor layer on an entire surface of a substrate;
a heat-sensitive recording layer forming step of forming a heat-sensitive recording layer in a portion other than a portion that is thermally bonded to a material to be sealed, on a surface of the anchor layer opposite to the substrate; and
a protective layer forming step of forming a protective layer on an entire surface of the anchor layer on a side where the heat-sensitive recording layer is formed.

16. A method for producing the heat-sealable heat-sensitive film according to claim 10, the method comprising:
a pre-printing step of forming a pre-print layer on a substrate; and
a heat-sensitive recording layer forming step of forming, after the pre-printing step, a heat-sensitive recording layer at an appropriate portion combined with the pre-print layer so that a pre-printed portion and a printed portion are combined to form a single design, in a portion of the substrate other than a portion that is thermally bonded to a material to be sealed.

17. The method for producing the heat-sealable heat-sensitive film according to claim 16, wherein the pre-printing step and the heat-sensitive recording layer forming step are performed using a register mark.

18. A roll paper in which the heat-sealable heat-sensitive film according to any one of claims 1 to 11 is continuously formed.
